# EUROPEAN PATENT APPLICATION

(11) **EP 2 693 618 A1**
(43) Date of publication of application: **05.02.2014**
(21) Application number: 12178670.1
(22) Date of filing: 31.07.2012
(51) Int. Cl.: H02M 1/42

(54) **Burst mode operation for a PFC power supply at low output power**

(71) Applicant: NXP B.V., 5656 AG Eindhoven (NL)
(72) Inventor: Zhang, Cheng, Redhill, Surrey RH1 1NY (GB); Pansier, Frans, Redhill, Surrey RH1 1NY (GB)
(74) Representative: Hardingham, Christopher Mark

(57) **Abstract**

A power factor controller (500) for a switched mode power supply is disclosed. The power factor controller comprises an inductor (L) configured to have an input electrically coupled to a rectified mains supply, a switch (M) configured to switchably couple an output of the inductor and a ground, the switch (M) being configured to couple the output of the inductor to the ground for a predetermined on-time (Tₒₙ), a periodic signal generator (610) for generating a periodic signal, and a circuit (630) configured to temporarily disable the switch in a low-power mode in dependence on the periodic signal. The circuit (630) may disable the switch outside an operating window of the period or throughout a subsequent period of the periodic signal.

A switched mode power converter is also disclosed, as is a method for controlling such a circuit is also disclosed.

## Description

### Field of the Invention

This invention relates to power factor controllers for switched mode power converters and to methods of operating power factor controllers.

### Background of the Invention

Power factor controllers (PFCs) are widely used as a first stage in Switch Mode Power Converters (SMPCs) in power management, for instance in PC, adapter and lighting. SMPCs may also be referred to as switched mode power supplies (SMPS). To control the DC voltage at the output of the PFC to a required value, conventional PFCs continuously keep converting power, and adapt the power delivered to the load by controlling the on-time of the PFC's power switch.

However, at very low load or even no load, a PFC generally cannot regulate its output voltage to the desired value, because the required on-time for each conversion cycle is too small to be well-controlled. Therefore, to enable no load operation, it is known for the following stage of the SMPC to turn off the PFC when the load is too low. The TEA1752 family of Greenchip™ SMPC controllers available from NXP semiconductors are examples of such known methods. However, this may limit the choice the following power converter, result in a poor transient response after a load step, or even reduce the life time of the output capacitor due to load variations.

### Summary

According to a fist aspect there is disclosed a power factor controller for a switched mode power supply and comprising: an inductor configured to have an input electrically coupled to a rectified mains supply; a switch configured to switchably couple an output of the inductor and a ground, the switch being configured to couple the output of the inductor to the ground for a predetermined on-time in a low-power mode; a periodic signal generator for generating a periodic signal; and a circuit configured to temporarily disable the switch, for a predetermined interval, at least one of (a) in dependence on the result of a comparison, at a predetermined moment of the periodic signal's period, between a signal derived from an output of the power factor controller and a first threshold value, and (b) in response to the periodic signal crossing a second threshold value before a second predetermined moment.

The periodic signal may thus be used to create the effect of a "burst mode" for the PFC. By temporarily disabling the switch of the power factor controller - that is to say, by keeping the switch open for longer than would be the case through the normal switching cycle - the power output from the PFC may be reduced, without the requirement to unduly limit the on-time, or to completely switch of the PFC.

In embodiments, the predetermined interval is the periodic signal's period, and the circuit is configured to disable the switch throughout a next subsequent period of the periodic signal in response to the comparison. Thus, the signal generator can be used to periodically check whether to temporarily disable the switch; further, it may be that the disablement may be extended for one or more further periods, in response to appropriate comparison results.

In embodiments, the signal derived from an output of the power factor controller is an error signal resulting from a comparison between an output voltage of the power factor controller and a reference voltage. The error signal resulting from the comparison may in particular result from a signal processing for the difference between the output voltage of the power factor controller and the reference voltage. This may be convenient, since the error signal may already be present in the control circuit of a power factor controller, to provide suitable on-time control, in either high-power mode, or low-power mode irrespective of whether burst mode control is implemented.

In embodiments, the periodic signal may have a frequency which is twice the frequency of the mains supply. The periodic signal may thus be simply generated from the mains supply.

In embodiments, the circuit is configured to disable the switch throughout a specific half-cycle of the mains supply in response to the periodic signal crossing a second threshold value before a second predetermined moment and the specific half-cycle is the half-cycle including the second predetermined moment. The circuit may thus define an operating window around the high voltage part of the mains, and limit the switching of the PFC to within that window, and such embodiments may be configured to operate in a configuration such that the window can have zero width.

In embodiments, the signal generator may generate a pulsed signal from the rectified mains supply. This may avoid the need for a separate signal generator, and may be useful in linking the frequency to the mains frequency, where this is appropriate.

In embodiments in which the circuit is configured to temporarily disable the switch for a predetermined interval in response to the periodic signal crossing a second threshold value before a second predetermined moment, the predetermined interval may be the mains half-cycle including the second predetermined moment. In such embodiments no separate burst mode control may be required; rather, it may be possible to set an operating window (over a mains half-cycle for the power factor controller) to have a zero width, resulting in the same effect of disabling the switch for an entirely half-cycle.

In embodiments, the periodic signal may be the voltage across a capacitor. A fast charging of such a capacitor may be indicative that the power factor controller may not be required to supply energy during that main half-cycle.

In embodiments, the power factor controller is also configured to operate in a high-power mode wherein the circuit is configured not to temporarily disable the switch. Thus the window or burst mode operation may be constrained to a low-power mode of the PFC, and the PFC may operate conventionally outside of the low power mode, and in particular in a high power mode.

According to a further aspect there is provided a switched mode power converter comprising a power factor controller as just described.

According to another aspect there is provided a control circuit, comprising a periodic signal generator and a circuit configured to temporarily disable the switch in dependence on the periodic signal and configured to control a power factor controller as described above.

According to a yet further aspect there is provided a method of operating a power factor controller, the power factor controller being for a switched mode power supply and comprising an inductor configured to have an input electrically coupled to a rectified mains supply, a switch configured to switchably couple an output of the inductor and a ground, the switch being configured to couple the output of the inductor to the ground for a predetermined on-time in a low-power mode, a periodic signal generator for generating a periodic signal; the method comprising temporarily disabling the switch throughout a predetermined interval, at least one of (a) in dependence on the result of a comparison between a signal derived from an output of the power factor controller and a first threshold value and (b) in response to the periodic signal crossing a second threshold value before a second predetermined moment.

In embodiments in which the predetermined interval is the periodic signal's period, the method may comprise disabling the switch throughout the next subsequent period of the periodic signal in response to the comparison, and wherein the signal derived from an output of the power factor controller is an error signal resulting from a comparison between an output voltage of the power factor controller and a reference voltage. The error signal resulting from the comparison may in particular result from a signal processing for the difference between the output voltage of the power factor controller and the reference voltage.

In embodiments, the periodic signal has a frequency which is twice the frequency of the mains supply.

In embodiments in which the predetermined interval is the half-cycle including the second predetermined moment and wherein the periodic signal has a frequency which is twice the frequency of the mains supply, the method may comprise disabling the switch throughout the predetermined interval in response to the periodic signal crossing a second threshold value before a second predetermined moment.

These and other aspects of the invention will be apparent from, and elucidated with reference to, the embodiments described hereinafter.

### Brief description of Drawings

Embodiments of the invention will be described, by way of example only, with reference to the drawings, in which
figure 1 shows a conventional power factor controller;
figure 2 is a timing diagram of mains voltage Vmain and a voltage rectified and filtered voltage Vin during mains cycles;
figure 3 is a timing diagram of the coil current IL, and the diode current ID and the voltage Vdrain at the drain of the switch during switching cycles;
figure 4 shows an error amplifier for a conventional PFC;
figure 5 shows a PFC stage of a SMPC according to embodiments;
figure 6 shows an example for a burst control block;
figure 7 is timing diagram at certain very low load condition;
figure 8 is a timing diagram for a PFC according to embodiments;
figure 9 is a timing diagram for a PFC according to other embodiments;
figure 10 shows a pulse generator for generating a square wave signal;
figure 11 is a schematic diagram of an operating window control element; figure 12 shows an example voltage controlled current source;
figure 13 shows the voltage at the capacitor, for various charging currents in the case of window control;
figure 14 is a timing diagram for a PFC according to yet other embodiments; and
figure 15 shows an example for another burst control block.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

### Detailed description

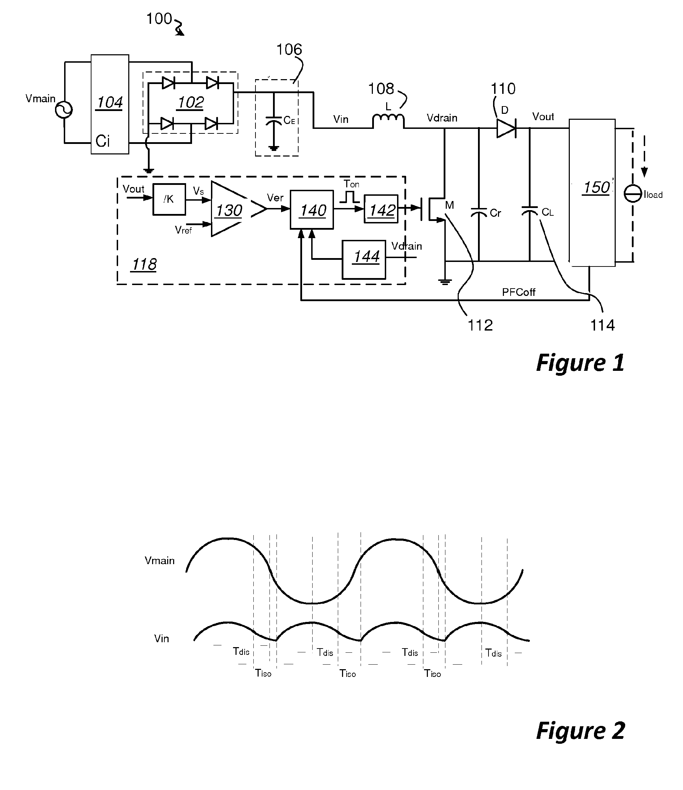

Figure 1 shows a conventional power factor controller 100, comprising a bridge rectifier 102, EMI filters Ci 104, CE 106 before and after the bridge rectifier, a boost converter comprising a coil L 108, a diode D 110 and a power switch M 112, a load capacitor CL 114, a capacitor Cr and the control circuitry 118 which will be described in more detail below. The mains voltage Vmain is rectified by the bridge rectifier and results in a rectified voltage (Vin) at the input of the boost converter. The capacitor Cr is optional, but may be used to form a well-defined oscillating frequency of the drain voltage of the switch M after the demagnetization of the coil, to facilitate soft-switching in boundary-conducting-mode.

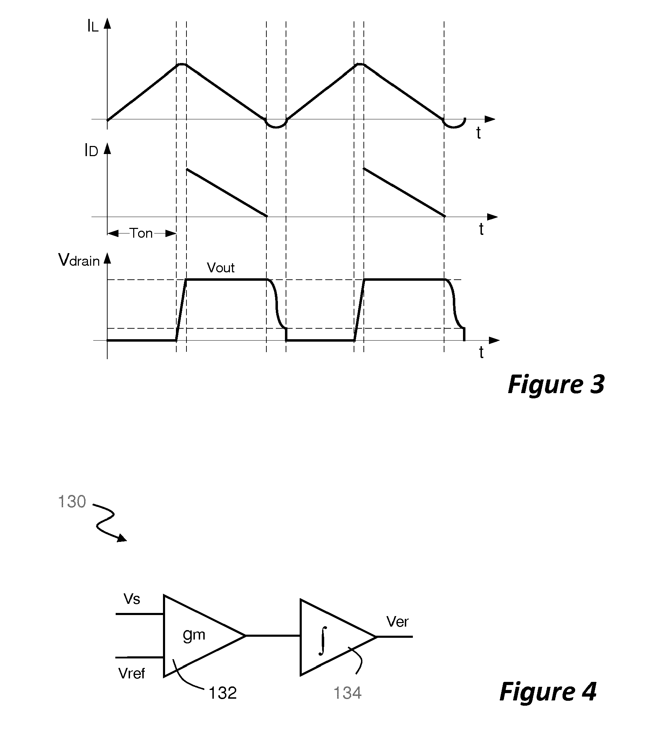

The mains cycle, which is generally 50Hz or 60 Hz, and the shorter switching cycle, which may be a few Khz up to 100s of kHz, will be considered in turn: considering first the mains cycle, figure 2 shows the mains voltage Vmain and the voltage Vin downstream of the rectifier and EMI filters over two mains cycles. As shown in figure 2, when the absolute value of mains voltage is rising and the bridge rectifier is conducting, the EMI capacitor CE is charged and Vin follows the absolute value of mains voltage. When the absolute value of mains voltage is falling, the EMI capacitor CE is discharged, and the discharge current is proportional to the differentiated mains voltage and keeps increasing during period Tdis. During this period, the bridge rectifier is still conducting and Vin follows the absolute value of mains voltage. When the differentiated mains voltage is so large that the boost converter cannot provide enough discharge current to sustain the conducting of the bridge rectifier, the bridge rectifier will not conduct and Vin will decrease with a exponential function over period Tiso. The duration of Tiso is related to the load. A lower load will result in a longer Tiso, as well as a smaller amplitude of Vin. Consider next the switching cycle, also known as the conversion cycle, of the PFC. This is illustrated in figure 3, which shows the coil current IL, the diode current ID, and the voltage Vdrain at the drain of the switch. In each conversion cycle, switch M is first turned on for an on-time ton. During ton, the coil current keeps increasing. At the end of ton, the switch M is turned off. Then the coil current starts decreasing and the drain voltage of M (Vdrain) is almost the same as the PFC output voltage (Vout). When the coil current drops to zero, Vdrain will start oscillation based on the coil inductance and the capacitance at the drain of M. Then, when Vdrain achieves its minimum value (valley) during the oscillation, switch M will turn on again and start the next conversion cycle.

The output voltage of PFC (Vout) is sensed by the control circuitry that will control the on-time of the power switch (ton) in each conversion cycle so that Vout always achieves the desired value with different load current (Iload). After the output voltage Vout is stabilized, ton will be constant with a fixed load current.

The block diagram of the control circuitry is also shown in Figure 1. Vout is first divided by a factor K (K>1), and the resulting signal is compared with a reference voltage Vref and their difference processed by an error amplifier 130 whose output voltage (Ver) is used to adjust ton. The output of Ton control block 140 (typically a square wave) drives a driver 142 that is used to drive the power switch M. Vdrain is sensed by the valley detection circuit 144 which outputs an impulse to Ton control block 140 when Vdrain reaches a valley so that Ton control block drives the driver again to start next conversion cycle.

An example of the error amplifier in the conventional PFC is shown in more detail in figure 4. It consists of a transconductance amplifier gm which compares the scaled version Vs of Vout with the reference voltage Vref, followed by an integrator 134.

At very low load or even no load, the required on-time ton for each conversion cycle is so small that the actual power delivered in each conversion cycle may be affected by some offset in the control integrated circuit (IC). As a result, the PFC output cannot be well-controlled to the desired voltage. Therefore, to enable no load operation, it is known for the following stage in the SMPC (150 in Figure 1) to turn the PFC off when the load is too low. The following stage may for example be a flyback converter. To do this, the following stage detects the very low load level, and provides a signal (PFCoff) to turn off the PFC.

As a result, when the PFC is turned off, the PFC output voltage will be determined by the peak value of the mains voltage. Since the rms value of mains voltage can typically vary from 100V to 230V, the PFC output voltage at very low load will exhibit a large spread. If the following stage 150 is input voltage sensitive - which is typically the case for resonant converters, for instance, it cannot operate well. Thus, turning-off PFC at very low load will limit the choice of the following power converter. Further if the rms value of mains voltage is low (say, 100V rms), the PFC output will be only about 140V (that is, the peak of the mains voltage) at very low load. If a load current step to high load appears, the PFC will turn on again to charge its output capacitor to the normal voltage (typically 400V). But this will take a long time due to the large difference between the initial voltage and the target voltage, which therefore results in a poor transient response. Yet further the normal PFC output voltage is always higher than the output voltage when PFC is turned off. Thus, once the load level cross the threshold of turn-on or turn-off PFC, the PFC output capacitor C_{L} will be charged or discharged. This charging and discharging in the time domain will reduce the life time of the output capacitor.

In embodiments, the PFC need not be switched off, even at very low loads or at no load. Rather, the PFC may operate in a so-called burst mode, or with so-called window-control. There may be no need for a control signal from the following stage to switch off the converter. The PFC may include a circuit configured to temporarily disable the switch M, in dependence on a periodic signal. By temporarily disabling is meant that the switch M is opened for longer than would be the case for a normal switching cycle as described above.

In other words, in embodiments PFC regulation is maintained at very low load power range by disabling power conversion by the PFC, over longer or shorter time intervals, that appear periodically. Thus means that PFC is never completely turned off, and its output will still be regulated to the desired value (such as, for instance, 400V) which is the same as the regulated output voltage at high load.

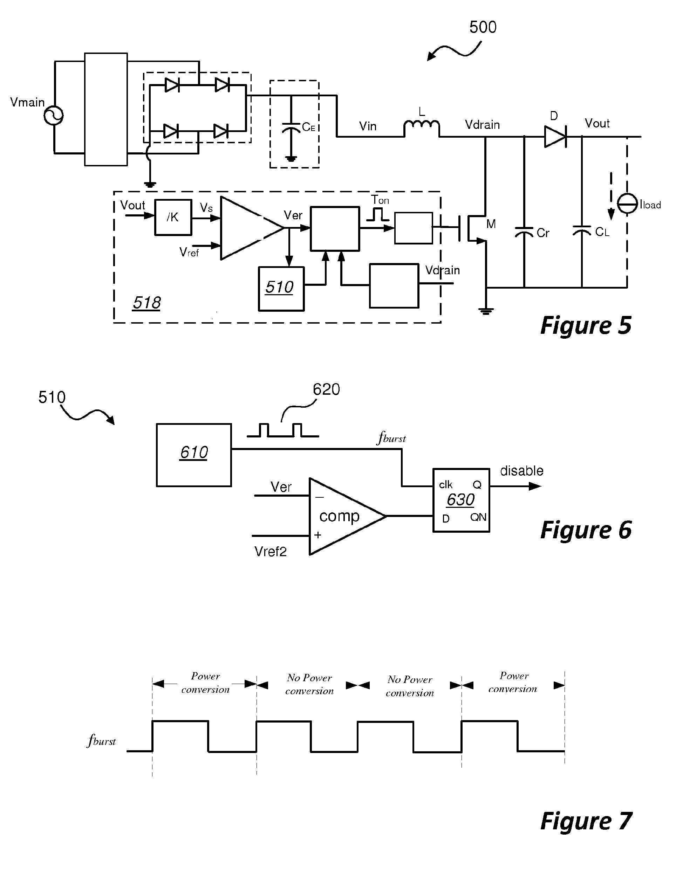

An example embodiment is shown in figure 5, in which a burst control block 510 is added to disable the power conversion over time intervals based on the signal from the error amplifier output Ver. Figure 5 shows a PFC stage of a SMPC. Most of the PFC stage is similar to that shown in figure 1, so will not be described again in detail here. It should be noted, however, that the following converter stage 150 shown in figure 1 is not shown separately in figure 5: rather the load Iload of figure 5 should be understood to include a subsequent converter stage 150. Figure 5 differs from figure 1 in that there is no control signal PFCoff from a following converter stage 150 to the PFC controller, (the PFC controller is in this figure is designated as 518 to distinguish it from the known controller 118). Rather, controller 518 includes a burst control block 510.

Figure 6 shows an example for the burst control block 510 in Figure 5. A pulse generator 610 generates a square wave signal *fburst* 620 with a certain cycle period. At the end of each cycle, the comparison results between the error amplifier output Ver and a reference voltage Vref2 is sampled by a D-type flip-flop 630 to determine whether the power conversion is to be disabled over the next square wave cycle period.

It will be observed, in passing, that this square wave signal is thus an example of a periodic signal, and this particular example may have a frequency which is twice that of the mains frequency. Even if the periodic signal has the same frequency, or a multiple or sub-multiple of the mains frequency, it may not have the same phase at the mains; the square wave signal *fburst* 620 is an example of a periodic signal which does not have the same phase as the mains.

Recalling that Ver is a value which is representative of the difference between a scaled version of the output voltage Vout from the PFC and a reference voltage Vref, and is conventionally used to directly determine the on-time, the circuit shown in figure 6 may be understood as operating such that, if the voltage Ver is smaller than the second reference voltage Vref2 at a particular moment in time (defined by the rising age of the square wave signal 620), then the switch M is disabled for a period corresponding to a cycle of the square wave signal 620. This will generally occur when the load is sufficiently low so as to ensure Ver is small at the time is it polled. The lower the load, the longer it will take until Ver exceeds Vref2, and so the burst control block disables switch M for more square wave cycles.

An example of the timing diagram at certain very low load conditions is shown in Figure 7. This figure shows 4 cycle periods of the square wave signal *fburst* 620. The polling of the comparator between the Ver and Vref2 at the end of the first period results that the switch M is disabled for the next complete cycle of the square wave, such that no power is converted during that cycle. At the end of that cycle, the polling again results in the switch M being disabled for the next complete cycle of the square wave. However, the polling at the end of that square wave cycle indicates that the switch M should no longer be disabled, and so power is converted during the next square wave cycle.

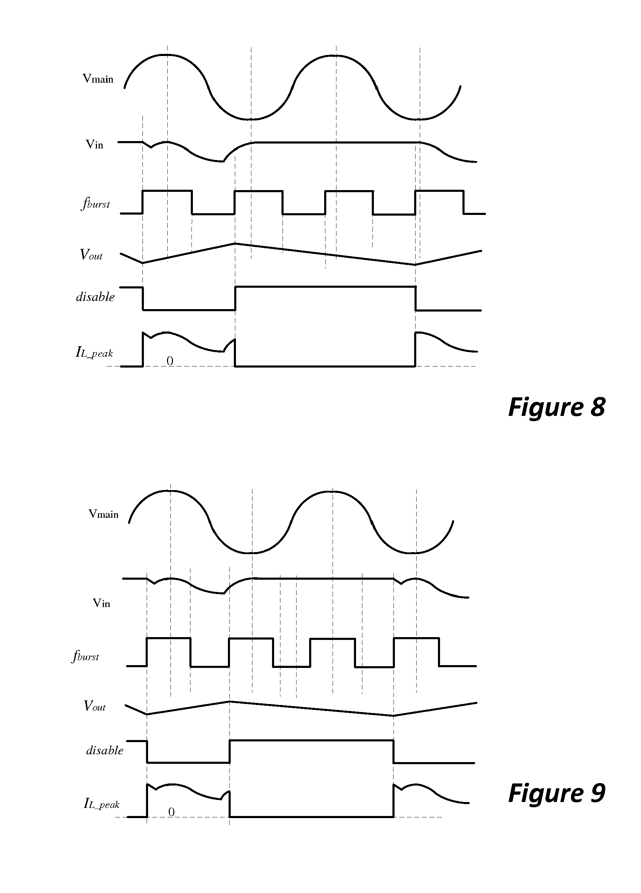

Figure 8 shows a timing diagram of a PFC operating at low load according to embodiments having a square wave signal *fburst* as just described. The figure shows, in descending order, the input voltage Vmain, the rectified and filtered voltage Vin, the square wave signal voltage *fburst* 620, the output voltage from the PFC Vout, the signal "disable" from the burst control block 510, and the envelope of the peak current in the coil IL_peak. The figure shows that the switch M operates throughout the first cycle period of the square-wave 510, then is disabled for the subsequent two cycles, and then operates for the final cycle shown.

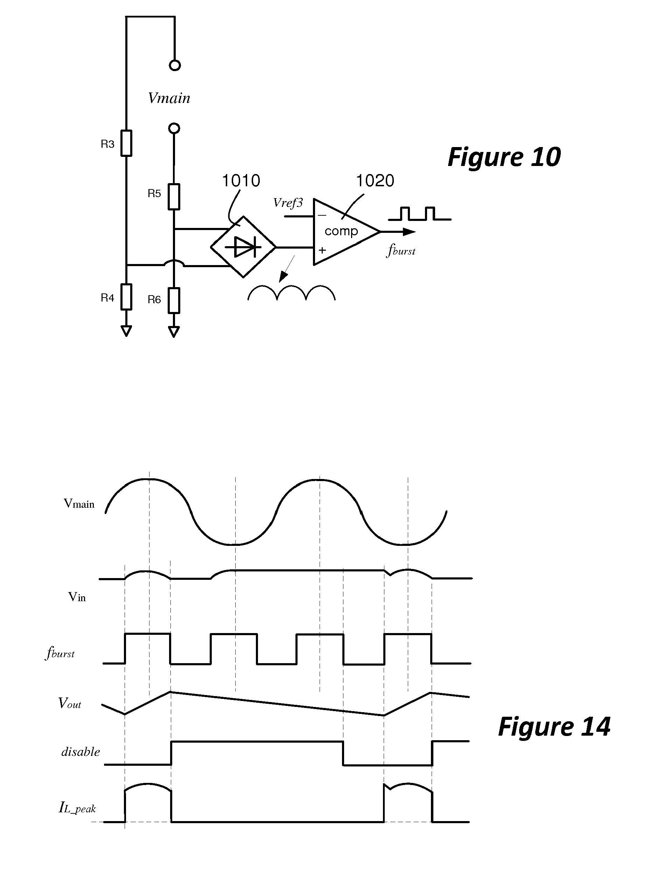

Figure 9 shows a timing diagram of a PFC operating according to embodiments again having a square wave signal *fburst* as just described, with the difference that in this case, the frequency of the square wave signal *fburst* is twice the mains frequency. An example of how such a square wave may be generated will be described hereinbelow with reference to Figure 10. Similarly to figure 8, figure 9 shows, in descending order, the input voltage Vmain, the rectified and filtered voltage Vin, the square wave signal voltage *fburst* 620, the output voltage from the PFC Vout, the signal "disable" from the burst control block 510, and the envelope of the peak current in the coil IL_peak. The figure shows that the switch M operates throughout the first cycle period of the square-wave 620, then is disabled for the subsequent two cycles, and then operates for the final cycle shown. It will be appreciated that, in embodiments where the squarewave frequency is equal to twice the mains frequency, the switch M will be disabled for periods which corresponds to an integral number of mains half-cycles, although it should be noted that the period during which the switch is disabled does not necessarily start at the zero crossing of the mains.

Figure 10 shows a pulse generator for generating a square wave signal *fburst* with a frequency which is twice that of the mains frequency: the mains voltage is sensed differentially by two resistor dividers R3 and R4 and R5 and R6. The sensed mains voltage is rectified by rectifier 1010 and then compared with a reference voltage Vref3 in comparator 1020. As a result, the comparator 1020 will generate a square wave signal with twice the mains frequency.

Conceptually, the above embodiments may be understood as temporary disabling the switch by turning it off for one or more half-cycles of mains voltage. In other embodiments, the switch may be not enabled during one or more half-cycles. That is to say, at no point during the one or more half cycles is the switch enabled: such embodiments relate particularly to so-called "window control", in which the switch M may be ordinarily disabled for a part or parts of a single mains half cycle, such as is disclosed in Applicant's previously published patent application, publication number WO2010-0082172-A1. In these embodiments the part of the mains half-cycle during which the PFC stage is actively switching is reduced to zero. In common with embodiments just described, in these embodiments, there is no requirement for an external control signal from a following converter stage. The inventors have appreciated that, by an alternative implementation of window control, it is possible to reduce the window to zero width; by reducing the switching time frame to zero, the transferred power can also be reduced to zero, without changing the control.

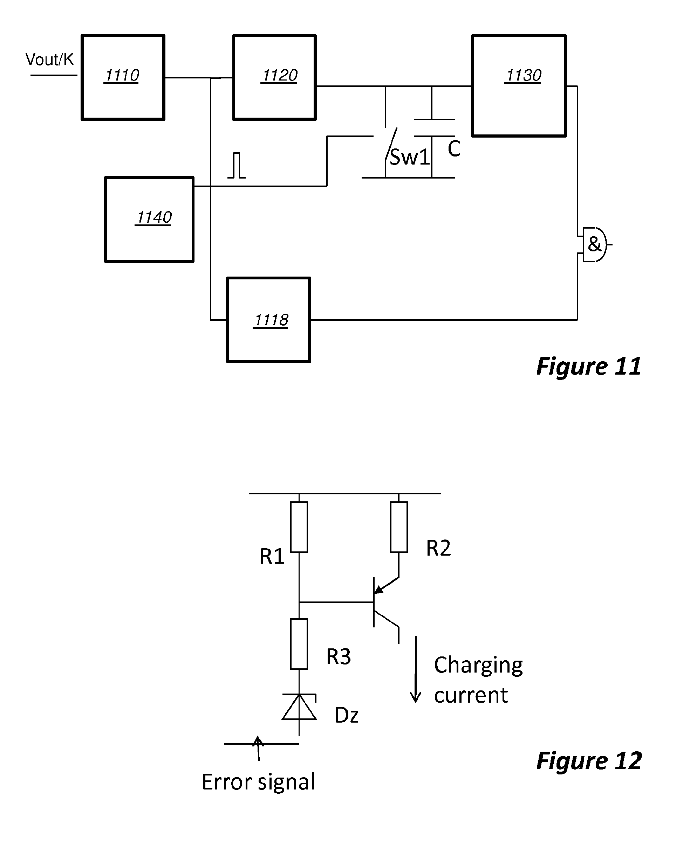

An example of such an operating window control element is shown schematically in figure 11. The output voltage Vout is scaled by a factor K, and the scaled output Vs = Vout/K is input to an error amplifier 1110. The output is a measure for the difference of the output voltage with respect to the required set value Vref. This output Ver will be termed the error signal hereinafter. This output is connected to both a conventional PFC control block 1118, and a voltage dependant current source 1120. The regular PFC control can be an on-time controller as described above reference to other embodiments, or could be another type of control, such as an Ipeak controller or an average current mode controller. The only restriction is that there will be a minimum on-time or peak current setting, independent of the error signal. The error signal is also connected to the input of the voltage dependant current source 1120. The control of this current source is such that when the error signal indicates a small on-time, equivalent to a low power requirement, the current source is increased. The relationship between the error signal and the current level may be linear.

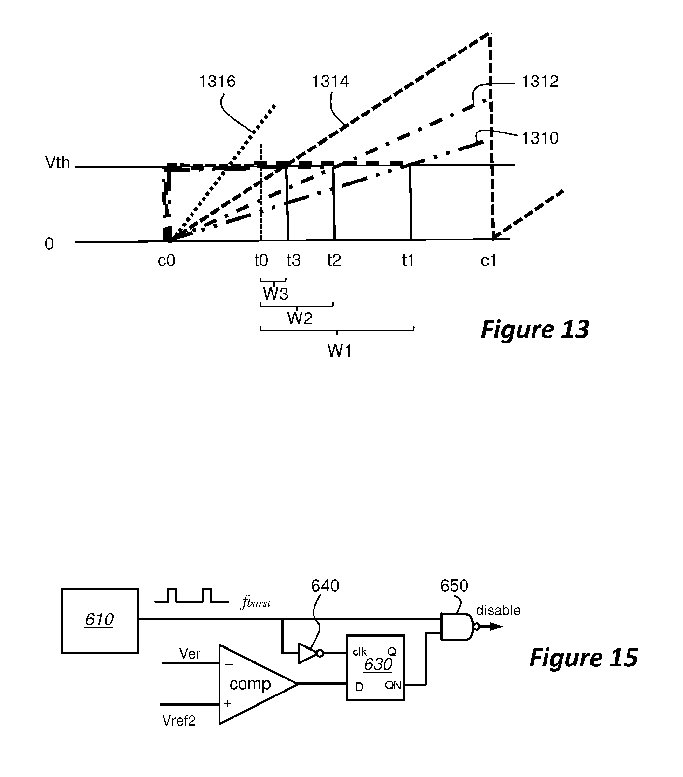

Figure 12 depicts a very simple embodiment of such a voltage dependent current source 1220, and comprises a zener diode DZ in series with a resistive divide R1 and R3. The node between the two resistors is connected to the gate of a transistor operating in its linear regime. The source of the transistor is connected to a scaling resistor R3, so that the use of R1, R2 and R3 together determine the ratio of the current versus the error signal. As long as the error signal output from 1210 is high there will be no charging current. When the error signal becomes smaller than a threshold defined by the voltage across DZ and the base-emitter voltage Vbe of the transistor, a current will start to flow, and that current will increase with decreasing error signal level. (It will be appreciated that figure 13 is configured for embodiments in which the smaller the error signal the smaller the on-time of the PFC switch M; in other embodiments the larger the error signal, the smaller the on-time of the PFC switch M: the circuit should then be adapted accordingly).

Returning to Figure 11, this current from the voltage dependent current source 1220 will charge a capacitor C. When the voltage across the capacitor is smaller than a predetermined value, the output of the comparator 1130 will be high. In this situation the drive pulses from the regular control circuitry will be passed through by the AND gate. When the voltage across the capacitor is larger than a predetermined value, the output of the comparator 1130 will be low. Then, the power conversion is disabled by the AND gate. The voltage across that capacitor will be reset each half-cycle of the mains. This is accomplished by a zero crossing detector 1140, such as will be well-known to the skilled person. This detector outputs a reset signal each time the mains voltage crosses zero, closing a switch Sw1 and thereby discharging the capacitor C.

It will be appreciated that there are very many other ways to build such a voltage controlled current source, and the skilled person will appreciate that, as mentioned, the operation may be inverted in the case that the relationship between the error signal and the on-time of the PFC switch M is inverted with respect to the embodiment just described. It will, also be appreciated that the function of reducing the time frame can also be implemented in a digital way, for instance by introducing a counter, starting at either the start of the window or at zero crossing, the count of which is compared with a value predetermined by the error signal to determine the end of the window.

The operation of the current source described in relation to Figure 11, is shown in Figure 13, in which time is shown flowing from left to right. The voltage across the capacitor C of Figure 13 is shown, for various, increasing, values of the charging rate at 1310, 1312, 1314 and 1316. The capacitor starts charging at the start, c0, of the mains half cycle. At moment t0, at the end of an offset period which will generally be predetermined, a frame-calculator is started, the control window opened (by closing the switch M). Once the voltage across the capacitor C reaches a threshold value Vth, the window closes. Thus, as shown in figure 13, the width w1, w2, w3 of the window decreases for increasing charging currents - that is to say, steeper rises in the voltage 1310,1312, 1314 across capacitor C.

As is also shown in Figure 13, if the charging current is sufficiently high, the voltage 1316 across the capacitor crosses the threshold level Vth before t0. In this cases, the control window does not open at all; that is to say, the switch M is temporarily disabled, in response to the periodic signal being the voltage across the charging capacitor, crossing the threshold before the predetermined moment t0.

In further embodiments, the method just described of limiting operation of the switch to a window, which may be reduced to zero width, within the half cycle may be combined with the method described earlier of limiting the switch to operate in a burst mode, such that the switch operates for at most only part of any half cycle, and these half cycles are in bursts with gaps therebetween.

The timing diagram for such an embodiment is shown in figure 14. Figure 14 shows the same current and voltage signals as shown in figures 8 and 9 for the case where the PFC switch M is operable during only some fraction of the square wave cycles, which in this case corresponds to the mains half-cycles, and only during a window for each mains half cycle in which it is operable at all. Similarly to the embodiments described with respect to figure 9, in this case the "burst" is for a single half-cycle followed by the switch being disabled for two half-cycles.

By suitably controlling the width of its pulses, the same pulse generator 610 which is used to control the timing of the bursts, may also be used to determine the width of the window. In this case, the burst control block 510 may also implement the window control. This is illustrated in figure 14, in which the output from the pulse generator 610 is input to the clock of the D-type flip flop, not directly as in figure 6, but via an inverter 640. The output is then re-inverted in a nor-gate 650. The other input to the nor gate is directly from the pulse generator; thus whenever the signal *fburst* is low, the power conversion is temporarily disabled.

From reading the present disclosure, other variations and modifications will be apparent to the skilled person. Such variations and modifications may involve equivalent and other features which are already known in the art of power factor controllers, and which may be used instead of, or in addition to, features already described herein.

The term "half-cycle", is used herein according to its conventional meaning, that is to say, one half of a cycle, which half starts and finishes with a zero-crossing.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A power factor controller for a switched mode power supply and comprising:
an inductor configured to have an input electrically coupled to a rectified mains supply;
a switch configured to switchably couple an output of the inductor and a ground, the switch being configured to couple the output of the inductor to the ground for a predetermined on-time in a low-power mode;
a periodic signal generator for generating a periodic signal;
and a circuit configured to temporarily disable the switch, for a predetermined interval, at least one of (a) in dependence on the result of a comparison, at a predetermined moment of the periodic signal's period,
between a signal derived from an output of the power factor controller and a first threshold value, and (b) in response to the periodic signal crossing a second threshold value before a second predetermined moment.

2. A power factor controller as claimed in claim 1, wherein the predetermined interval is the periodic signal's period, and the circuit is configured to disable the switch throughout a next subsequent period of the periodic signal in response to the comparison.

3. A power factor controller as claimed in claim 2, wherein the signal derived from an output of the power factor controller is an error signal resulting from a comparison between an output voltage of the power factor controller and a reference voltage.

4. A power factor controller according to any preceding claim, wherein the periodic signal has a frequency which is twice the frequency of the mains supply.

5. A power factor controller according to claim 4, wherein the signal generator generates a pulsed signal from the rectified mains supply.

6. A power factor controller according to any of claims 2 to 5, in which the circuit is configured to temporarily disable the switch for a predetermined interval in response to the periodic signal crossing a second threshold value before a second predetermined moment and the predetermined interval is the mains half-cycle including the second predetermined moment.

7. A power factor controller according to claim 1 or 6, wherein the periodic signal is the voltage across a capacitor.

8. A power factor controller according to any preceding claim, further configured to operate in a high-power mode wherein the circuit is configured not to temporarily disable the switch.

9. A switched mode power convertor, comprising a power factor controller as claimed in any preceding claim.

10. A control circuit, configured to control a power factor controller as claimed in any preceding claim, and comprising the periodic signal generator and the circuit configured to temporarily disable the switch.

11. A method of operating a power factor controller, the power factor controller being for a switched mode power supply and comprising an inductor configured to have an input electrically coupled to a rectified mains supply, a switch configured to switchably couple an output of the inductor and a ground, the switch being configured to couple the output of the inductor to the ground for a predetermined on-time in a low-power mode, a periodic signal generator for generating a periodic signal; the method comprising temporarily disabling the switch in dependence on the periodic signal including disabling the switch throughout a predetermined interval at least one of (a) in dependence on the result of a comparison between a signal derived from an output of the power factor controller and a first threshold value and (b) in response to the periodic signal crossing a second threshold value before a second predetermined moment.

12. The method of claim 11 wherein the predetermined interval is the periodic signal's period, comprising disabling the switch throughout a next subsequent period of the periodic signal in response to the comparison, and wherein the signal derived from an output of the power factor controller is an error signal resulting from a comparison between an output voltage of the power factor controller and a reference voltage.

13. The method of claim 11 or 12, wherein the periodic signal has a frequency which is twice the frequency of the mains supply.

14. The method of claim 11 in which the predetermined interval is the half-cycle including the second predetermined moment, wherein the periodic signal has a frequency which is twice the frequency of the mains supply, and comprising disabling the switch throughout the predetermined interval in response to the periodic signal crossing a second threshold value before a second predetermined moment.
